(19) Europäisches Patentamt
European Patent Office
Office européen des brevets

(11) **EP 1 862 659 A1**

(12) **DEMANDE DE BREVET EUROPEEN**

(43) Date de publication:
**05.12.2007 Bulletin 2007/49**

(51) Int Cl.:
*F02D 41/40* *(2006.01)* *F02D 41/14* *(2006.01)*
*F02D 41/26* *(2006.01)*

(21) Numéro de dépôt: **07301054.8**

(22) Date de dépôt: **21.05.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK YU**

(30) Priorité: **30.05.2006 FR 0604837**

(71) Demandeur: **Peugeot Citroen Automobiles SA 78943 Vélizy-Villacoublay Cedex (FR)**

(72) Inventeurs:
• **Souchon, Vincent**
  **92400, Courbevoie (FR)**
• **Suy, Dara**
  **95360, Montmagny (FR)**

(74) Mandataire: **Pinchon, Odile**
  **Peugeot Citroën Automobiles SA**
  **Propriété Industrielle (LG 081)**
  **18, Rue des Fauvelles**
  **92250 La Garenne-Colombes (FR)**

(54) **Procede et dispositif de correction du debit de l'injection de carburant dit pilote dans un moteur diesel a injection directe du type a rampe commune, et moteur comprenant un tel dispositif**

(57) L'invention concerne un procédé et un dispositif (3) de correction du débit d'injection pilote. Le dispositif (3) comprend un module estimateur (30) de valeurs de débit basé, soit sur des mesure de pression dans les cylindres (300), à partir desquelles sont dérivées des valeurs de dégagement de chaleur, soit sur des mesures de nombre de tours du moteur RPM (301), à partir desquelles sont dérivées des différences de RPM, avec et sans injection pilote, pour obtenir des valeurs transmises à un module de recalage (31). Ce module (31) calcule à partir de ces valeurs, des valeurs de consigne de débit stockées dans des premières cartographies et de la pression dans la rampe commune ($C_{cr}$) des temps d'ouverture des injecteurs qui sont stockés dans des deuxièmes cartographies (33). Un module superviseur (34), associé à un compteur kilométrique (35), contrôle l'apparition de conditions spécifiques du fonctionnement du moteur pour autoriser les mesures et la modification des valeurs de consigne de débit.

Application à un moteur diesel à injection directe et rampe commune

**Fig. 5**

**Description**

L'invention concerne un procédé de correction du débit de l'injection de carburant dit pilote dans un moteur diesel à injection directe du type dit à rampe commune.

L'invention concerne également un dispositif pour la mise en oeuvre de ce procédé.

L'invention concerne aussi un moteur comprenant un tel dispositif.

Dans la technologie récente des moteurs diesel, l'injection directe s'est imposée pour son rendement supérieur à celui des moteurs à injection indirecte. Elle permet des consommation et pollution moindres.

Cependant la technologie initialement mise en oeuvre n'était pas exempte de problèmes, notamment ceux liés aux bruits de combustion et à l'émission d'oxyde d'azote (NOx). Pour pallier à ces problèmes, on a fait appel à des dispositifs de régulation électronique (par exemple à base de calculateurs numériques à programmes enregistrés) pour piloter les systèmes d'injection, ce qui a permis de stabiliser et d'affiner les réglages de base, tant au niveau de l'instant de l'injection que du débit de combustible.

En outre, les différents dispositifs d'injection mécaniques par pompe distributrice, régulés ou non de manière électronique, présentent comme caractéristique commune une variation de la pression d'injection en fonction de la vitesse de rotation du moteur qui rend difficile une maîtrise totale de la combustion. Aussi, on a fait appel à la technologie d'injection dite « à rampe commune » ou « common rail », selon la terminologie anglo-saxonne communément utilisée, ce qui a permis de s'affranchir de cette contrainte. Selon cette technologie, la pression d'injection est indépendante de la vitesse de rotation du moteur et demeure constante pendant la phase d'injection.

Enfin, de façon avantageuse, la quantité de combustible injecté peut être fractionnée en deux phases de façon à réaliser une pré-injection, encore appelée « injection pilote », ce qui permet de réduire encore plus les bruits de combustion et la formation de NOx, injection pilote suivie d'une injection principale. La faible quantité de carburant (1 à 4 mm$^3$) pré-injectée permet de préparer, par une augmentation de la température et de la pression dans les chambres de combustions des cylindres, l'inflammation du combustible lors de l'injection principale. L'injection principale fournit l'essentiel du couple du moteur. Les quantités de carburant à injecter dépendent des conditions de roulage, ainsi que de la volonté du conducteur

Le pilotage par un système électronique numérique de tous les paramètres de l'injection, notamment ceux relatifs à la phase d'injection pilote, permet d'optimiser le fonctionnement du moteur.

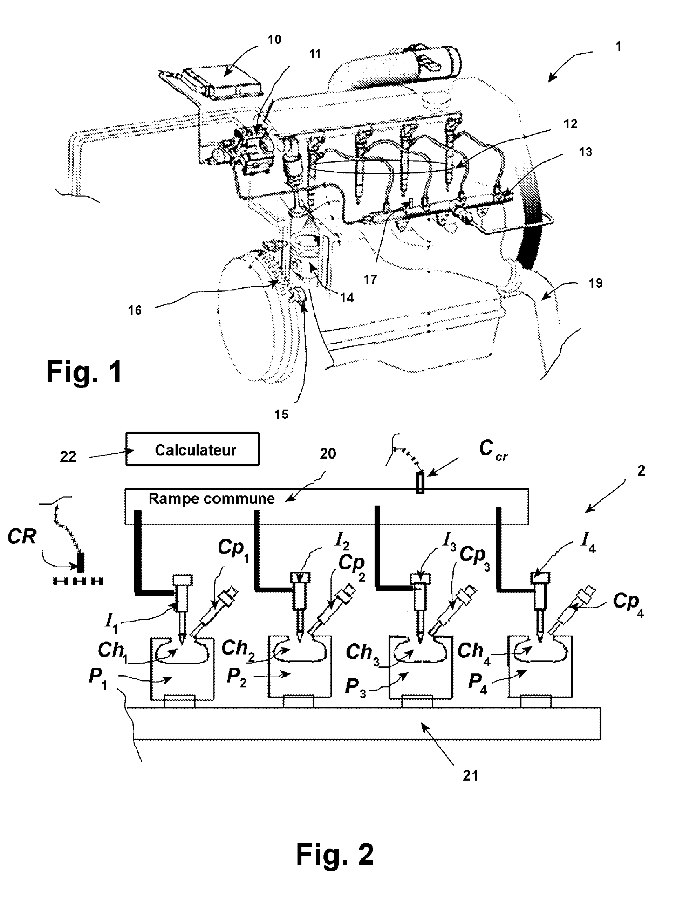

La figure 1 annexée à la présente description illustre, en écorché partiel, un exemple de moteur diesel 1 à injection directe et à rampe commune.

Sur la figure 1, seuls les principaux organes qui seront nécessaires à la bonne compréhension de l'invention ont été référencés. On a supposé que le moteur comprenait quatre cylindres, dont un seul, 14, a été représenté.

Dans ce moteur diesel 1 à rampe commune 13, chaque cylindre (par exemple 14) comporte une chambre de combustion dans laquelle est injecté du carburant au moyen d'un injecteur. Sur la figure 1, les quatre injecteurs portent une référence unique 12 et sont connectés à la rampe commune 13. Dans cette dernière, le carburant est maintenu à haute pression par une pompe 11 elle-même connectée, via un conduit 18, au réservoir (non représenté) du véhicule. Cette pompe 11 permet d'effectuer des injections de carburant dans chaque cylindre à des pressions élevées, généralement comprises entre 200 et 1600 bars (soit entre 20 et 120 MPa, respectivement).

Le fonctionnement de chaque injecteur 12 est piloté par une unité électronique 10, par exemple un calculateur numérique, qui commande la quantité de carburant injectée par cet injecteur dans la chambre de combustion du cylindre 14. Pour ce faire, le calculateur 10 reçoit des informations telles qu'un couple requis par le conducteur du véhicule ou la pression du carburant dans la rampe commune 13, et commande en conséquence une durée d'ouverture ou d'activation de l'injecteur 12, telle que ce dernier injecte dans la chambre du cylindre 14 la quantité de carburant nécessaire à l'obtention du couple requis par le conducteur.

Les gaz d'échappement sont évacués par un tuyau d'échappement 19.

De façon classique, le moteur diesel 1 est muni en série d'un certain nombre de capteurs, notamment d'un capteur 17 mesurant la pression précitée dans la rampe commune 13 et d'un capteur 15 dit de « régime moteur». Le capteur 17 est par exemple de type piézo-résistif et fournit un signal électrique proportionnel à la pression régnant dans la rampe commune 13, signal transmis au calculateur 10. Le capteur 15 est généralement de type inductif. Ce capteur 15, fixé au carter d'embrayage, détecte le passage d'une configuration particulière de dents métalliques 16 disposées en périphérie d'une couronne dentée entraînée par le moteur 1. Il peut être également de type magneto-résistif. Dans ce cas, la cible est de type magnétique, et non plus mécanique comme précédemment. Le capteur 15 informe le calculateur 10 de la vitesse de rotation du moteur 1 et de la position du piston du cylindre dit « N° 1 ».

On comprend aisément que la précision et la robustesse des injections soient primordiales, que ce soit à court terme (moteur neuf) ou sur une période longue. Or, la dérive des injecteurs (due en particulier à leur vieillissement, leur encrassement, etc.) ne permet pas de garantir des réglages optimaux prédéfinis durant toute la vie du moteur. Il est donc nécessaire de disposer d'un moyen de contrôle de l'injection (quantité, avance, séparation, ...) et de correction des dérives, de façon à rattraper tout écart et retrouver un bon point de fonctionnement.

Dans l'Art Connu, on a proposé un certain nombre de dispositifs et de procédés permettant de mesurer, contrôler, voire de corriger les paramètres associés à l'injection de carburant. On peut citer, à titre non exhaustif, les demandes et brevets suivants :

- la demande de brevet américain US2005/0107943 A1 (DENSO CORPORATION) : cette demande concerne un recalage des débits de carburant injectés dans les chambres de combustion d'un moteur diesel, basé sur un capteur régime ;
- le brevet américain US6196184 B1 (SIEMENS) : ce brevet divulgue une stratégie embarquée dans un calculateur pour la commande de l'injection pour un moteur diesel utilisant un accéléromètre pour obtenir des informations sur la combustion ;
- le brevet européen EP1416140 B1 (BOSCH AUTOMOTIVE SYSTEMS CORPORATION et TOYOTA): selon le procédé enseigné par ce brevet, les débits de carburant injecté sont déterminés par rapport à un débit consigne calculé par des méthodes d'apprentissage lors de phases de ralenti ; et
- le brevet américain US5941213 (HONDA MOTOR CO LTD) : ce brevet divulgue un système permettant de déterminer et de corriger la quantité de carburant injectée grâce à une mesure du dégagement de chaleur.

On peut enfin citer la demande de brevet français FR2838775 A1, au nom de la Demanderesse et de « DELPHI DIESEL SYSTEMS FRANCE ».

Le fonctionnement des injecteurs, leurs dérives dans le temps et les inconvénients qui en résultent y sont décrits de façon détaillée, notamment en regard de la description de la figure 2 de cette demande de brevet. Aussi pour une compréhension approfondie des phénomènes mis en jeu, on pourra s'y référer avec profit.

Il est cependant utile de rappeler que la durée d'activation des injecteurs est déterminée en fonction de la quantité de carburant devant être injectée dans les chambres de combustion et de la pression de carburant dans la rampe commun. La durée d'activation dépend en outre des caractéristiques de l'injecteur, c'est pourquoi elle est prédéterminée par le constructeur, par exemple de façon empirique. Toutefois, il est connu que le fonctionnement d'un injecteur équipant un véhicule présente des écarts par rapport à ce fonctionnement prédéterminé. En effet, de façon pratique, la prédétermination est effectuée au moyen d'un injecteur modélisé ne prenant en compte ni les tolérances acceptées lors de l'usinage des injecteurs, ni surtout l'usure de ces derniers (voir figure 2 de la demande de brevet français FR2838775 A1).

Aussi, il a été proposé dans cette demande de brevet d'effectuer un recalage des débits de carburant pilotes basé sur la détection du pied de courbes obtenues à partir de quatre capteurs de pression, chaque capteur étant disposé dans un cylindre.

En effet, on constate dans un premier temps que, pour un injecteur modélisé, il existe un temps minimal d'activation à compter de l'émission de la commande d'injection avant que l'injection de carburant ne débute dans la chambre de combustion et que, dans un deuxième temps, la quantité de carburant injectée varie linéairement par rapport au temps, ce rapport entre quantité de carburant injectée et temps d'activation étant dénommé dans cette demande de brevet « pente de fonctionnement » de l'injecteur modélisé.

L'expérience montre que, pour un injecteur réel usé, le temps minimal d'activation dérive par rapport à sa valeur initiale, soit à la baisse, soit à la hausse. Une remarque similaire s'impose quant aux dérives de la valeur de pente de fonctionnement de l'injecteur par rapport à celle de l'injecteur modélisé.

Ces écarts présentent des inconvénients gênants pour le fonctionnement du moteur. En effet, lorsqu'un injecteur fonctionne avec un décalage de l'instant d'activation et/ou avec une pente de fonctionnement modifiée, les durées d'activation commandées par le calculateur provoquent l'injection d'une quantité de carburant dans les chambres de combustion distincte de la quantité optimale prédéterminée, quantité de carburant sensiblement plus faible que la quantité attendue.

Les écarts sont d'autant plus gênants que la pression du carburant est élevée, car lorsque cette pression augmente, On constate des écarts, dans un sens ou dans un autre, entre la quantité de carburant injecté par un injecteur ayant déjà fonctionné un certain temps par rapport à celle, théorique, de carburant injecté par un injecteur modélisé.

Ces écarts provoquent une baisse des performances (couple, puissance), une augmentation du bruit de combustion et/ou une augmentation des émissions polluantes du moteur, en particulier des oxydes d'azote.

Ces problèmes peuvent concerner l'ensemble des cylindres d'un moteur ou chaque cylindre séparément.

Selon l'enseignement de cette demande de brevet, on considère que la correction du décalage de l'instant d'injection d'un injecteur s'avère suffisante pour corriger de façon satisfaisante les écarts de fonctionnement des injecteurs réels par rapport au fonctionnement prédéterminé.

Divers modes de réalisation sont décrits. Notamment, selon un des modes décrits, on calcule une relation de proportionnalité entre le dégagement de chaleur du mélange air-carburant dans les chambres de combustion et le débit de carburant injecté. Cette relation permet de déterminer les dérives dans le temps des injecteurs et, à partir de ces déterminations, d'opérer des corrections sur la quantité de carburant pilote injecté.

Les méthodes et dispositifs décrits dans cette demande de brevet, ainsi que dans les autres demandes et brevets qui viennent d'être rappelés, visent certes à résoudre les problèmes posés et à répondre aux besoins qui se font sentir. Mais l'expérience a montré que les solutions apportées n'étaient que partielles et/ou imparfaites, certaines complexes et/ou onéreuses, en tout état de cause pouvaient être sensiblement améliorées.

Aussi, l'invention se fixe pour but, tout à la fois, de répondre pleinement aux besoins qui se font sentir, de simplifier l'architecture du dispositif de recalage d'injection après détection de dérives temporelles d'origines diverses des caractéristiques fonctionnelles des injecteurs et, au moins pour certains modes de réalisation, de réduire les coûts de revient des dispositifs mis en oeuvre, en tirant profit de la présence d'organes montés en série sur les moteurs diesels du type visé, c'est-à-dire à injection directe et à rampe commune.

Le dispositif de correction de débit de carburant lors de l'injection pilote comprend au moins deux dispositifs principaux : un dispositif de mesure que l'on appellera ci-après « estimateur » et un dispositif de correction proprement dit qui permet d'opérer le recalage souhaité de l'injection après détection d'une dérive.

L'estimateur selon l'invention se décline lui-même selon deux modes de réalisation principaux.

Dans un premier mode de réalisation, qui constitue un mode préféré, on dispose des capteurs de pression dans chaque cylindre du moteur.

A partir de la pression mesurée dans chaque chambre de combustion, il est possible d'en déduire la quantité ou le débit de carburant injecté (gasoil), de la comparer avec une quantité de carburant pilote pré-établie, dite de consigne, et d'effectuer des corrections lorsque des dérives sont constatées, pour le moins des dérives supérieures à un seuil prédéterminé.

Comme il a été rappelé, il a été montré dans la demande de brevet français FR2838775 A1 précitée qu'il existait une relation de proportionnalité entre le dégagement de chaleur du mélange air-carburant dans les chambres de combustion et le débit de carburant injecté. En outre, il a été également montré qu'il existe une relation quasi-linéaire entre un débit de consigne fixé à l'avance et l'intégrale du dégagement de chaleur calculée à partir des informations « pression cylindre » mesurées par les capteurs de pression disposé dans les cylindres. L'invention tire partie de ces caractéristiques pour la réalisation d'un estimateur selon le mode préféré.

Dans ce premier mode de réalisation, on remplit une cartographie décrivant les caractéristiques fonctionnelles des injecteurs, cartographie que l'on stocke dans des moyens de mémoire du calculateur pilotant ces injecteurs. Cette cartographie est remplie lors des phases d'études et de calibration d'un moteur pour pouvoir offrir un recalage même à neuf des injecteurs.

Dans un second mode de réalisation, on tire profit d'un capteur de régime (figure 1 : 15) présent en série sur la plupart des véhicules munis d'un moteur diesel du type visé par l'invention.

Cette solution a l'avantage de ne pas induire un surcoût sur le prix du moteur, puisque ce capteur est déjà présent. Cependant, l'expérience montre qu'elle fournit une information dégradée sur la combustion. Elle peut cependant s'avérer suffisante, selon le degré de précision recherché, pour le recalage de l'injection.

De façon plus précise, la mesure utilisée dans ce mode de réalisation, est la différence qui existe entre le niveau de rotation par minute (« RPM », exprimé en tr/min) pendant une injection et sans injection pilote. Il est possible de déterminer une correspondance entre cette valeur et le débit de carburant injecté.

Comme dans le mode de réalisation précédent, il est également possible de remplir une cartographie décrivant les caractéristiques fonctionnelles des injecteurs, cartographie que l'on stocke dans des moyens de mémoire du calculateur pilotant ces injecteurs. Cette cartographie est remplie lors des phases d'études et de calibration d'un moteur et donne la possibilité d'un recalage même à neuf des injecteurs.

En mode opérationnel du véhicule (c'est-à-dire lors de son utilisation effective), le dispositif de correction reçoit les données de sortie de l'estimateur et les compare à une valeur de référence (quantité de chaleur ou RPM) pour une quantité consigne testée. Si cette différence dépasse un seuil prédéterminé, le dispositif de correction considère qu'il est nécessaire de corriger le point de débit consigne en rajoutant ou en retranchant du carburant.

De façon pratique, dans le dispositif de correction, les paramètres de commande moteur traduisent un débit consigne en temps d'ouverture des injecteurs, ce en connaissant la pression de la rampe commune. Il est donc nécessaire de rajouter une valeur de décalage de temps d'ouverture, ou « offset » selon la terminologie anglo-saxonne couramment utilisée, pour retrouver le débit de carburant pilote de consigne. Avantageusement, cet offset est obtenu par incrémentation jusqu'à obtenir la valeur de référence souhaitée (quantité de chaleur ou RPM). La valeur de temps d'ouverture obtenue est sauvegardée dans une cartographie de correction fonction de la pression dans la rampe commune. Il existe une cartographie par cylindre.

Dans un mode de réalisation préféré encore, la nouvelle valeur de temps d'ouverture n'est pas utilisée telle quelle. On effectue une moyenne avec la donnée précédente de la cartographie, par application d'une relation qui sera précisée ci-après. La nouvelle valeur ainsi calculée est utilisée pour le recalage de l'injection.

L'invention présente plusieurs avantages par rapport aux dispositifs et procédés de l'art connu. Notamment, elle offre une plus grande précision et une plus grande robustesse car elle met en oeuvre un procédé de correction plus direct. A titre d'exemple, selon le procédé enseigné par la demande de brevet français FR2838775 A1 précitée, la correction de débit était obtenue de façon indirecte en agissant sur la position du pied de courbe. Elle permet également, au moins dans le deuxième mode de réalisation de l'estimateur, une implémentation moins onéreuse, puisque aucun capteur spécifique n'est nécessaire.

L'invention a donc pour objet principal un procédé de correction du débit de carburant de pré-injection, dit pilote, injecté par au moins un injecteur d'un moteur diesel du type à injection directe et à rampe commune dans au moins une chambre de combustion, le moteur comprenant des circuits de contrôle et de commande du débit pilote de carburant injecté dans chacune des chambre de combustion, ces circuits comprenant des moyens de mémorisation de données, caractérisé en ce qu'il comprend au moins :

- une phase initiale dite de calibrage comprenant les étapes :

  - d'estimation du débit pilote de carburant réellement injecté par chacun des injecteurs obtenue par la mesure d'un paramètre physique modifié par le débit pilote de carburant ;
  - de comparaisons avec des valeurs de consigne de débit de carburant pilote pré-établies stockées dans les moyens de mémorisation, de manière à obtenir une série de points caractérisant le fonctionnement de chaque injecteur ; et
  - de stockage dans des moyens de mémorisation de donnés, pour chacun des injecteurs, de ces points de fonctionnement sous la forme d'une première cartographie de valeurs de référence ; et

- des phases ultérieures dites opérationnelles comprenant les étapes :

  - de réitération des étapes d'estimation et de comparaison réalisées pendant la phase initiale, de manière à obtenir une nouvelle série de valeurs des points de fonctionnement ;
  - de déterminations de différences entre les nouvelles valeurs obtenues et les précédentes valeurs de référence de la première cartographie ; et
  - l'utilisation des différences ainsi déterminées pour en dériver des valeurs de correction de débit pilote de carburant.

L'invention a encore pour objet un dispositif de correction du débit de carburant pilote pour la mise en oeuvre de ce procédé.

L'invention a encore pour objet un moteur diesel du type à injection directe et à rampe commune comprenant un tel dispositif de correction du débit de carburant pilote.

L'invention va maintenant être décrite de façon plus détaillée en se référant aux dessins annexés, parmi lesquels :

- la figure 1 illustre, en écorché partiel, un exemple de moteur diesel à injection directe et à rampe commune selon l'art connu ;
- la figure 2 illustre schématiquement un moteur diesel à injection directe et rampe commune selon l'invention ;
- la figure 3 est un graphique illustrant la relation existante entre des débits de carburant pilote mesuré et consigne dans un premier mode de réalisation ;
- la figure 4A est graphique permettant de déterminer des différences de niveaux de rotation par minute (*RPM*) du moteur, avec et sans injection pilote, selon un deuxième mode de réalisation de l'invention ;
- la figure 4B est un graphique illustrant la relation existante entre des débits de carburant pilote mesuré et consigne dans ce deuxième mode de réalisation, relation obtenue à partir des détermination effectuées sur le graphique de la figure 4 A ; et
- la figure 5 illustre schématiquement un dispositif de correction complet permettant un recalage de l'injection pilote, selon deux modes de réalisation de l'invention.

La figure 2 illustre schématiquement un moteur diesel à injection directe et rampe commune selon l'invention, désormais référencé 2. A l'exception des spécificités propres à l'invention qui seront signalées ci-après, le moteur de la figure 2 est tout à fait semblable, dans sa configuration générale, à un moteur de l'art connu, par exemple celui décrit en regard de la figure 1. L'invention ne nécessite pas de modifications substantielles, ce qui présente d'ailleurs un avantage important. Il est donc inutile de re-décrire en détail les différents organes constitutifs du moteur 2.

On suppose que le moteur 2 comprend quatre cylindres, munis chacun d'un piston $P_1$ à $P_4$ et d'une chambre de combustion, $Ch_1$ à $Ch_4$. Il comprend aussi une rampe commune 20, des injecteurs, $I_1$ à $I_4$, un capteur de régime CR, un capteur $C_{cr}$ pour la mesure de la pression de rampe commune 20 et un tuyau d'échappement 21. A *priori,* ces organes ne diffèrent en rien quant à leur structure des organes correspondants de la figure 1. Seuls leurs modes de fonctionnement, au moins pour certains, sont spécifiques à l'invention, comme il va l'être montré ci-après. Comme il a été rappelé, le capteur CR est monté en série sur la plupart des moteurs du type visé par l'invention.

Le moteur 2 est également muni d'un calculateur numérique 22 ou d'un dispositif similaire. En soi, les éléments constitutifs de ce calculateur 22 peuvent être communs, en tout ou partie, avec ceux d'un calculateur de l'art connu. Ce calculateur 22 peut d'ailleurs se voir dévolu des fonctions standards (mesure de température, etc.) qui sortent du cadre strict de l'invention. Par contre, en ce qui concerne les fonctions spécifiques à l'invention, notamment en premier lieu la correction du débit d'injection pilote, les circuits associés à ces fonctions et/ou les programmes de commande implémentés dans celui-ci sont également spécifiques.

Enfin, selon une des caractéristiques importantes d'un premier mode de réalisation de l'invention, on dispose dans chaque cylindre un capteur de pression, $CP_1$ à $CP_4$. De façon pratique, ils peuvent être intégrés dans les bougies dites de « pré-chauffage », montées en série sur les moteurs diesels. Ces capteurs, $CP_1$ à $CP_4$, peuvent être de tous types classiques adaptés aux pressions régnant dans les cylindres, par exemple de type piézo-électrique, comme le capteur $C_{cr}$.

Le recalage du débit de carburant pilote nécessite la connaissance de la quantité de carburant (gasoil) réellement injectée dans un cylindre donné afin de la comparer à une quantité consigne préétablie. Il est donc nécessaire en premier lieu de la mesurer. C'est le rôle d'un premier dispositif que l'on appellera ci-après« estimateur ». Bien que, pour mieux mettre en évidence les caractéristiques essentielles de l'invention, on supposera ci-après qu'il s'agit d'un dispositif séparé, de façon pratique, ce rôle peut être dévolu au calculateur 22 qui commande les injecteurs, $I_1$ à $I_4$.

Comme il a été précédemment rappelé, l'estimateur peut être décliné selon deux modes de réalisation principaux. De façon plus précise, l'estimateur selon l'invention peut utiliser indifféremment des capteurs de pression, selon un premier mode de réalisation, en l'occurrence les capteurs de pression de cylindre référencés $CP_1$ à $CP_4$, ou le capteur régime CR, selon le deuxième mode de réalisation. Seuls les calculs effectués par l'estimateur sont différents.

Le premier mode de réalisation d'un estimateur va maintenant être décrit. Dans ce mode, on utilise des signaux électriques de sortie délivrés par les capteurs de pression $CP_1$ à $CP_4$.

Comme il a été rappelé dans le préambule de la présente description, on a mis en évidence dans la demande de brevet français FR2838775 A1 l'existence d'une relation quasi-linéaire entre un débit de carburant pilote consigne et l'intégrale du dégagement de chaleur calculée à partir de l'information « pression cylindre ». Pour chaque cylindre, cette information est fournie par le capteur de pression, $CP_1$ à $CP_4$, qui lui est associé.

Le dégagement de chaleur moyen est obtenu à partir de l'équation thermodynamique suivante :

$$DQ = \overline{\quad} = \frac{\overline{\quad}}{\underline{\quad}} \times \left( \quad \times \frac{}{\quad} + \quad \times \quad \times \frac{}{\quad} \right) \quad (1)$$

avec

$DQ$ :   dégagement de chaleur instantané (en J/°vil) ;
P :   vecteur pression (en Pa) ;
V :   vecteur volume de de la chambre de combustion (en m$^3$) ;
$\alpha$ :   angle du vilebrequin du moteur (en °vil) ; et
k :   coefficient polytropique ;

On effectue l'intégration sur une fenêtre angulaire correspondant à l'injection pilote. On entend par « fenêtre angulaire » une variation d'angle vilebrequin (°vil) d'amplitude déterminée et positionnée également de façon déterminée par rapport au point dit « Point Mort Haut » (ou « *PMH* ») d'un cycle de combustion, par exemple, pour fixer les idées, $\pm$ 10 °vil autour du « *PMH* ». Cependant cette fenêtre angulaire peut être décalée par rapport au « *PMH* », par exemple être située dans la gamme - 15 et - 5 °vil.

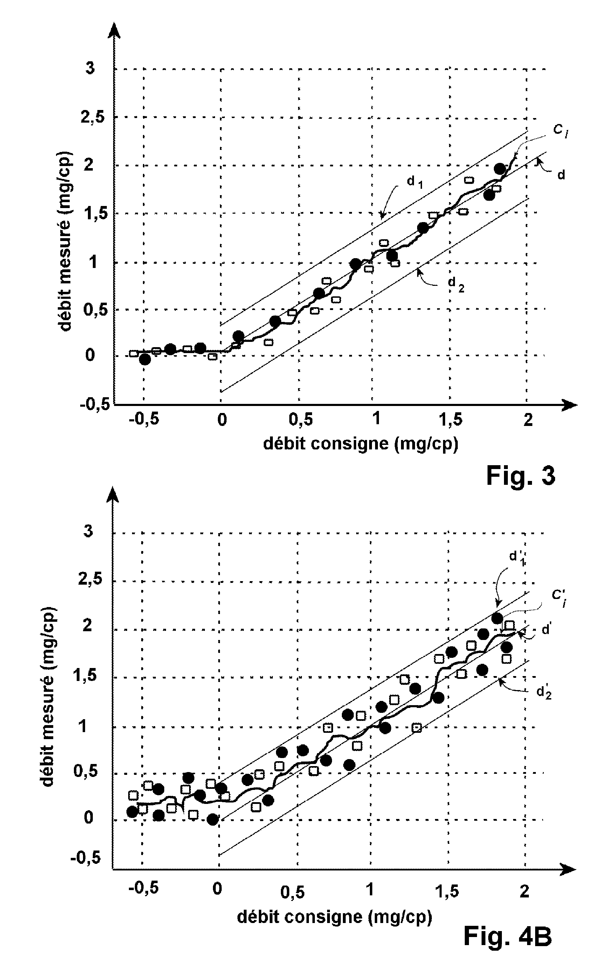

On a rassemblé les mesures obtenues, pour deux régimes moteurs (points de mesures respectifs symbolisés par des cercles pleins et des rectangles vides), sur le graphique de la figure 3.

L'axe des abscisse représente le débit consigne (de - 0,5 à 2 mg/cp dans l'exemple particulier décrit) et l'axe des ordonnées le débit effectivement mesuré (de - 0,5 à 3 mg/cp). Pour des raisons de lisibilité de la figure, on n'a représenté qu'un nombre restreint de points de mesure, mais on doit bien comprendre que le nombre de points obtenus lors d'une série de mesures réelles est beaucoup plus important.

On a également représenté sur la figure 3 une courbe Ci interpolant le nuage de points de mesure. Finalement, par extrapolation, on peut alors tracer une droite d, à une constante de gain près g, ou pente de la droite, représentant la relation de proportionnalité entre le débit mesuré et le débit consigne, soit une fonction du premier degré à partir des points d'abscisses et d'ordonnées 0 telle que :

$$[\textit{Débit mesuré}] = g \times [\textit{Débit consigne}] \quad (2),$$

Pour fixer les idées, dans un exemple de réalisation pratique, on obtient g = 2, 40 J/mg/cp.

On calcule également un facteur $R^2 = 0{,}989$, ou coefficient de régression, qui caractérise la qualité de la mesure obtenue par ce premier mode de réalisation de l'estimateur.

Le nuage de points de mesure est compris entre deux droites, $d_1$ et $d_2$, représentant un gabarit, distantes de part et d'autre de la droite d de $\pm$ x mg, avec par exemple x = 0,3 mg.

Une fois obtenue la relation (2), il devient possible de sélectionner des paires de points supports sur la droite d afin de reconstituer les caractéristiques fonctionnelles d'un injecteur donné sur la base de la mesure de la pression de cylindre et de remplir un tableau que l'on appellera « cartographie » ci-après. Cette cartographie est initialement remplie lors des phases d'études et de calibration du moteur 2 (figure 2), ce qui permet un recalage même à neuf des injecteurs, $I_1$ à $I_4$.

La cartographie peut être stockée dans des positions de mémoire de moyens de mémorisation associés au calculateur 22 (figure 2). Pour fixer les idées, la cartographie peut prendre l'aspect du TABLEAU placé en fin de la présente description. Dans l'exemple décrit, les différentes cellules de ce tableau sont remplies avec les valeurs de référence $DQ_{réf14}$ à $DQ_{réf41}$, pour quatre injecteurs, $I_1$ à $I_4$, et pour quatre valeurs de débit d'injection pilote de carburant de consigne : 0,5 à 2 mg/coup.

Le deuxième mode de réalisation d'un estimateur va maintenant être décrit. Dans ce mode, on utilise les signaux électriques de sortie délivrés par un capteur de régime (figure 2 : $CR$).

Le mode de fonctionnement de l'estimateur basé sur le capteur régime CR est similaire à celui basé sur des capteurs de pression disposés dans les cylindres du moteur 2.

Le capteur CR étant présent sur tout moteur diesel du type visé par l'invention, ce mode de fonctionnement présente l'avantage d'être plus économique, puisqu'il ne nécessite pas le recours à des composants spécifiques. Cependant l'expérience montre que la qualité du signal mesuré est inférieure à celle obtenue par un estimateur conforme au premier mode de réalisation, comme il va l'être montré ci-après. En effet, on constate que des phénomènes autres que la combustion (par exemple l'inertie des pistons, les frottements de ces pistons dans la chambre de combustion, etc.) modifient l'allure du régime instantané.

Selon ce mode de réalisation, la mesure effectuée est basée sur la différence entre le niveau de rotations par minute, dénommé ci-après « RPM », en présence d'une injection pilote et sans une telle injection.

Il est rappelé que, de façon connue, en régime dit « de levé de pied » (lors d'une décélération), il n'y a pas d'injection de carburant. Dans le cadre du deuxième mode de réalisation de l'invention, le calculateur 22 (figure 2) impose une injection pilote au rythme d'un coup sur deux.

Dans ce mode de réalisation, on a constaté que l'on peut mettre en évidence une correspondance entre la valeur RPM dérivée des informations fournies par le capteur CR et le débit pilote injecté.

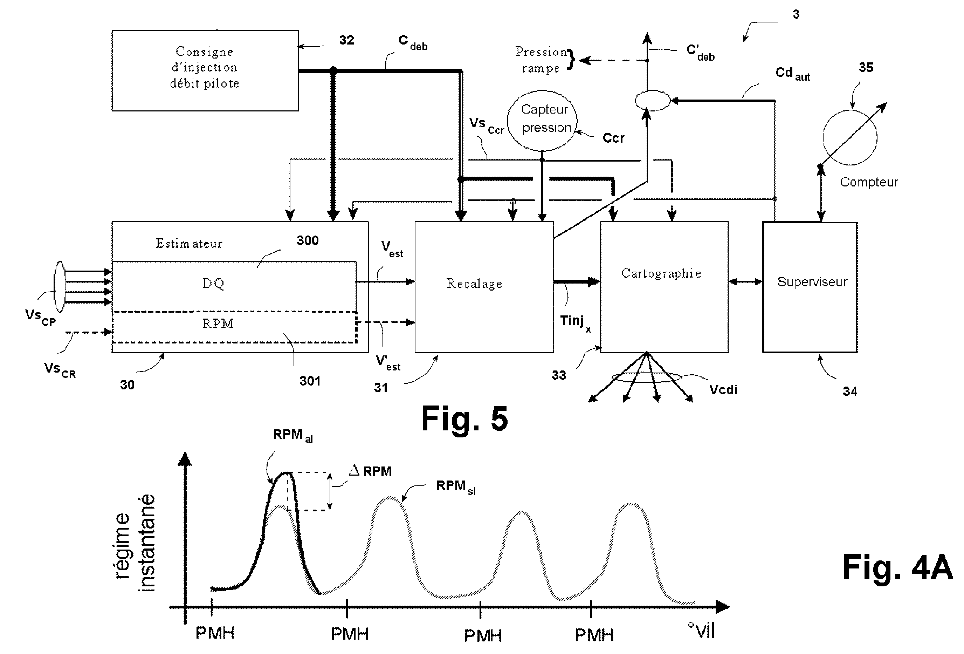

Sur la figure 4A, on a tracé deux courbes, $RPM_{ai}$ et $RPM_{si}$, représentant les régimes instantanés (ordonnée) du moteur 2 (figure 2), avec et sans injection pilote respectivement, en fonction de l'angle vilebrequin (°vil), pour un cycle complet de moteur (deux tours, soit quatre « PMH ». Les points référencés $PMH$, sur l'abscisse, représentent les « Points Morts Hauts » de ces cycles.

On a rassemblé les mesures obtenues, c'est-à-dire les différences $\Delta RMP = RPM_{ai} - RPM_{si}$, avec et sans injection pilote, pour deux régimes moteurs (points de mesures respectifs symbolisés par des cercles pleins et des rectangles vides), sur le graphique de la figure 4B.

L'axe des abscisse représente le débit consigne (de - 0,5 à 2 mg/cp dans l'exemple particulier décrit) et l'axe des ordonnées le débit effectivement mesuré (de - 0,5 à 3 mg/cp). Pour des raisons de lisibilité de la figure, on n'a représenté qu'un nombre restreint de points de mesure, mais on doit bien comprendre que le nombre de points obtenus lors d'une série de mesures réelles est beaucoup plus important.

Comme dans le premier mode de réalisation, on obtient par interpolation une courbe C'i et, par extrapolation, on peut alors tracer une droite $d'$, à une constante de gain près g', ou pente de la droite, représentant la relation de proportionnalité entre le débit mesuré et le débit consigne, soit une fonction du premier degré à partir des points d'abscisses et d'ordonnées 0 telle que :

$$[\textit{Débit mesuré}] = g' \times [\textit{Débit consigne}] \quad (3),$$

On calcule également un facteur $R^2 = 0{,}888$, ou coefficient de régression, qui caractérise la qualité de la mesure obtenue par ce premier mode de réalisation de l'estimateur.

7

On constate, à l'examen de la configuration du nuage de points de mesure que la précision obtenue est moindre (dispersion des points de mesure plus importante), ce que confirme la valeur du paramètre $R^2$ = 0,888, inférieure à celle obtenue avec le procédé selon le premier mode de réalisation ($R^2$ = 0, 989).

Le nuage de points de mesure est compris entre deux droites, $d'_1$ et $d'_2$, représentant un gabarit, distantes de part et d'autre de la droite d' de $\pm$ x mg, avec par exemple x = 0,3 mg.

Comme précédemment, une fois obtenue la relation (3), il devient possible de sélectionner des paires de points supports sur la droite d', afin de reconstituer les caractéristiques fonctionnelles d'un injecteur donné sur la base de la mesure de *RPM* et on remplit un tableau ou « cartographie ». Comme précédemment, cette cartographie est remplie lors des phases d'études et de calibration du moteur 2 (figure 2), ce qui permet un recalage même à neuf des injecteurs, $I_1$ à $I_4$.

La cartographie peut être stockée dans des positions de mémoire de moyens de mémorisation associés au calculateur 22 (figure 2). Pour fixer les idées, la cartographie peut prendre l'aspect du TABLEAU placé en fin de la présente description. Dans l'exemple décrit, les différentes cellules de ce tableau sont remplies avec les valeurs de référence $\Delta RPM_{réf14}$ à $\Delta RPM_{réf41}$, pour quatre injecteurs, $I_1$ à $I_4$, et pour quatre valeurs de débit consigne pour l'injection pilote de carburant: 0,5 à 2 mg/coup.

On va maintenant détailler le module de recalage de débit d'injection pilote de carburant.

Lors d'une estimation effectuée durant l'utilisation d'un véhicule entraîné par le moteur 2, les données en sortie de l'estimateur sont comparées, soit aux valeurs de référence $DQ_{refij}$, soit aux valeurs de référence $\Delta RPM_{réfij}$, selon le mode de réalisation de l'estimateur (avec i et j compris entre 1 et 4 dans l'exemple décrit : voir « TABLEAU » ou « TABLEAU », respectivement), pour la quantité de carburant pilote consigne testée. Si cette différence dépasse un seuil prédéterminé, le module de recalage considère qu'il est nécessaire de corriger le point de débit pilote consigne en rajoutant ou en retranchant une quantité approprié de carburant.

De façon pratique, dans le calculateur 22, un module de commande de l'injection pilote traduit un « *débit consigne* » en « *temps d'ouverture* » de l'injecteur correspondant, ce, de façon connue en soi, en connaissant la pression de la rampe commune 20 (figure 2) donnée par le capteur $C_{cr}$. Il est donc nécessaire de rajouter une valeur de décalage de temps d'ouverture, ou « offset » selon la terminologie anglo-saxonne, pour retrouver un débit consigne correct. Cet offset est obtenu par incrémentation jusqu'à obtenir, soit à une des valeurs de référence $DQ_{réfij}$, soit à une des valeurs de référence $RPM_{réfij}$ précitées. Cette valeur est sauvegardée dans une cartographie de correction fonction de la pression dans la rampe commune 20. De façon plus précise, il existe une cartographie par cylindre, c'est-à-dire par injecteur, $I_1$ à $I_4$.

Dans un mode de réalisation préférée, la nouvelle valeur d'offset ainsi obtenue, *Tinj_nouv,* n'est pas directement prise en compte telle quelle. Il est nécessaire d'effectuer une moyenne avec la valeur d'offset précédemment stockée dans la cartographie, *Tinj_anc* :

Pour ce faire, la valeur finale d'offset, *Tinj_final,* est calculé conformément à la relation ci-dessous :

$$Tinj\_final = \quad \times Tinj\_nouv + (1 - \quad) \times Tinj\_anc \quad (4) \; ;$$

avec un coefficient de moyenne prédéterminé satisfaisant la relation 0 < <1.

C'est cette valeur finale d'offset, *Tinj_final,* qui est ajoutée au temps d'ouverture d'un injecteur pour compenser les effets de dérive.

Les temps d'ouverture des injecteurs servent à remplir une cartographie supplémentaire et sont stockés dans des moyens de mémoire (non représentés) du calculateur 22.

Pour fixer les idées, cette cartographie peut prendre la configuration du TABLEAU disposé en fin de la présente description : temps d'ouverture $Tinj_{11}$ à $Tinj_{44}$, pour un injecteur donné et pour des paires de valeurs « pressions dans la rampe 20 - débits de carburant pilote de consigne », exprimés en bars et mg/coup, respectivement. Il existe naturellement une cartographie par injecteur, $I_1$ à $I_4$.

La figure 5 illustre schématiquement un dispositif complet 3 de recalage du débit de carburant pilote d'injection, par exemple réalisé à base d'un calculateur numérique à programme enregistré (figure 2 : 20). L'architecture générale du dispositif 3 représentée sur cette figure 5 convient aux deux modes de réalisation principaux de l'invention.

Le dispositif 3 comprend cinq modules principaux, à savoir un estimateur 30, un organe de recalage de débit de carburant pilote 31, des moyens de stockage 33 de la cartographie de temps d'injection pilote et un organe qui sera dénommé ci-après superviseur 34.

Les quatre premiers modules, 30 à 33, remplissent les fonctions qui viennent d'être décrites : estimation (30), recalage (31), stockage des cartographies $Tinj_{11}$ (34) et stockage des valeurs de consigne de débit pilote (32). L'utilité du quatrième module, 34, sera explicitée ci-après.

On a représenté par deux blocs diagrammes distincts les deux modes de réalisation de l'estimateur 30 : en trait plein, un estimateur 300 selon le premier mode de réalisation, et en traits pointillés, un estimateur 301 selon le deuxième mode de réalisation. A *priori,* dans un mode de réalisation pratique, l'estimateur 30 comprend seulement l'un ou l'autre des modules 300 ou 301.

Dans le premier mode de réalisation (module 300) l'estimateur 30 reçoit les signaux de sortie, $Vs_{CP1}$ à $Vs_{CP4}$, des capteurs de pression de cylindre, $CP_1$ à $CP_4$ (figure 2), représentés sous une référence unique $Vs_{CP}$.

Dans le deuxième mode de réalisation (module 301) l'estimateur 30 reçoit le signal de sortie, $Vs_{CR}$, du capteur de régime moteur CR (figure 2).

Dans les deux modes de réalisation, l'estimateur 30 reçoit également des signaux de commande représentant le débit de carburant pilote de consigne, $C_{deb}$ (un par injecteur $I_1$ à $I_4$) délivrés par le module 32. Il reçoit enfin le signal de sortie $Vs_{Ccr}$ délivré par le capteur de pression de rampe $C_{cr}$, et représentant la pression régnant dans la rampe 20 (figure 2).

Les signaux de sortie de l'estimateur 30, soit $Vs_{est}$ (premier mode de réalisation), soit $Vs'_{est}$ (deuxième mode de réalisation), sont transmis au module 31 de calcul de recalage de débit de carburant pilote. Ces signaux sont élaborés selon l'un des deux procédés précédemment décrits.

Le module de calcul de recalage de débit de carburant pilote 31 reçoit également les signaux de sortie $C_{deb}$ délivrés par le module 32. Le module 31 élabore les cartographies de temps d'ouverture d'injecteurs, par exemple celle du TABLEAU (une cartographie par injecteur), selon le procédé précédemment décrit, à partir des signaux *($Vs_{est}$ ou $Vs'_{est}$)* reçus de l'estimateur 30, du signal de commande de consigne d'injection pilote $C_{deb}$ et du signal de sortie $Vs_{Ccr}$ Ces différents temps d'ouverture d'injecteur, sous la référence unique $Tinj_x$, sont délivrés sur la sortie du module 31 pour être stockés dans des moyens de mémoire 33, x étant compris entre 1 et le nombre de valeurs dans chaque cartographie multiplié par le nombre d'injecteurs. Dans l'exemple décrit, le nombre total de valeurs enregistrées est donc égal à 4x16 = 64. En pratique, ce nombre peut être beaucoup plus important.

Le module 33 reçoit en entrée les signaux de temps d'ouverture $Tinj_x$, le signal de pression de rampe commune $Vs_{Ccr}$, et les signaux de commande représentant le débit de carburant pilote de consigne, $C_{deb}$.

Les valeurs stockées dans les cartographies enregistrées dans les moyens de mémoire 33 servent à générer des signaux de commande d'injection, $Vcdi_1$ à $Vcdi_4$, représentés sous la référence unique $Vcdi$. Les signaux $Vcdi$ sont transmis à des moyens de calcul classiques (non représentés) élaborant à leur tour des signaux de commande des injecteurs, $I_1$ à $I_4$.

Toujours en pratique, si les corrections doivent être effectuées de façon continue, par contre, il n'est pas nécessaire d'effectuer des recalages de débit de carburant pilote de façon continue. L'expérience montre que la dérive des injecteurs, $I_1$ à $I_4$, est relativement lente dans le temps.

On complète le dispositif de la figure 5 par un module 34, comprenant notamment des moyens de calcul, qui sera dénommé ci-après superviseur. Ce module est chargé de générer un signal de commande, $Cd_{aut}$. Le signal $Cd_{aut}$ autorise un nouveau recalage en fixant une nouvelle valeur de consigne de débit pilote, $C'_{deb}$, lorsque certaines conditions pré-établies sont réunies. Dans ce cas, l'estimateur 34, par l'intermédiaire du signal , impose également une nouvelle valeur de la pression, $Vs_{Ccr}$, régnant dans la rampe commune (Fig. 2 : 20). De ce fait, on obtient un système de correction de type « en boucle fermée ».

Concrètement, on peut associer au module 34 un compteur kilométrique 35 ou un organe similaire qui se réinitialise à chaque recalage et émet un signal de commande de recalage lorsqu'une distance de roulage prédéterminée à été mesurée.

Au superviseur 34 est également dévolue la fonction de détection de conditions appropriées du régime moteur pour exécuter les calculs décrits précédemment. Il doit également veiller à un remplissage de tous les éléments des cartographies selon une séquence appropriée. Ces fonctions sont symbolisées par un bus *BS* de transmission bidirectionnelle de données de commande et de test connecté aux modules 30 et 31.

En effet, le recalage doit s'effectuer sous certaines conditions pour pouvoir s'affranchir de certains paramètres qui pourraient fausser l'estimation du débit pilote (comme la présence d'une injection principale ou d'un « EGR », pour « Exhaust Gas Recirculation » ou recirculation de gaz d'échappement). Aussi, dans un mode de réalisation préféré de l'invention, ces exigences conduisent à ne lancer les recalages nécessaires que durant la décélération du véhicule. Durant cette phase, le superviseur 34 sélectionne un injecteur donné, un débit pilote à tester, une valeur de pression de rampe commune et lance les opérations d'estimation et de recalage qui ont été décrits précédemment (bus de données et de test *BS).* Ces opérations restent tout à fait imperceptibles pour le conducteur du véhicule car les débits testés (typiquement de 0 à 2 mg/coup) sont faibles.

Le superviseur 34 doit enfin se charger de tester tous les points de cartographie pour chacun des quatre injecteurs, selon un ordre déterminé et de façon uniforme. Pour ce faire, il comprend un compteur cyclique qui s'incrémente à la fin de chaque correction et permet de déterminer quel point de quelle cartographie doit être testé.

Pour fixer les idées, toujours dans l'exemple décrit pour lequel le moteur 2 (figure 2) comporte quatre injecteurs, $I_1$ à $I_3$, et chaque cartographie seize valeurs, un ordre de remplissage typique est indiqué dans les tableaux « TABLEAU : cylindre N° 1 » à « TABLEAU : cylindre N° 4 », placés en fin de la présente description. Les numéros figurant dans chacune des cellules de ces tableaux représentent le numéro d'ordre de remplissage séquentiel des cartographies précitées, soit 1 à 64.

De nombreux essais pratiques de véhicules sur bancs à rouleaux ont montré la validité des relations reliant les débits de carburant pilote et les valeurs de référence $DQ_{réfij}$ ou $RPM_{réfij}$, respectivement, selon le mode de réalisation de l'estimateur 30. Ces essais ont été réalisés pour plusieurs valeurs de débits de carburant pilote et plusieurs valeurs de pression dans la rampe commune 20. Ces essais ont également permis de déterminer la précision d'obtention du débit de carburant pilote, à savoir $\pm$ 0,2 mg/coup, si l'on met en oeuvre des capteurs de pression de cylindre (premier mode de réalisation) et $\pm$ 0,3 mg/coup, si l'on met en oeuvre un capteur de régime moteur (deuxième mode de réalisation). On constate bien une légère dégradation de la précision obtenue dans ce deuxième mode, mais qui peut être jugée acceptable dans beaucoup d'applications.

Le tableau « TABLEAU » placé en fin de la présente description rassemble les résultats rappelés ci-dessus. L'abréviation *« PCYL »* (pression cylindre) est relative au premier mode de réalisation de l'estimateur 30 et « RPM » au deuxième mode, avec RPM < 1800 t/mn.

Dans ce tableau, la lettre « s » est l'abréviation de 3σ ce qui signifie qu'une mesure de pression cylindre a une valeur de trois écart-type à $\pm$ 0,35 mg/cp. De façon pratique, 99 % des mesures sont situées dans l'intervalle précité de $\pm$ 0,35 mg/cp.

On constate à la lecture de ce qui précède que l'invention atteint bien les buts qu'elle s'est fixée.

Elle présente de nombreux avantages, notamment une grande précision de mesure et une robustesse élevée.

Elle n'est toutefois pas limitée aux seuls exemples de réalisation qui ont été explicitement décrits, par référence notamment aux figures 2 à 5.

De même, des exemples numériques précis n'ont été donnés que pour mieux mettre en évidence les caractéristiques essentielles de l'invention et ne résultent que d'un choix technologique, en soi à la portée de l'Homme de Métier. Ils ne sauraient limiter de quelle que manière que ce soit la portée de l'invention.

**TABLEAU I**

| Débit consigne (mg/cp) | Injecteur $I_1$ | Injecteur $I_2$ | Injecteur $I_3$ | Injecteur $I_4$ |
|---|---|---|---|---|
| 2 | $DQ_{réf14}$ | $DQ_{réf24}$ | $DQ_{réf34}$ | $DQ_{réf44}$ |
| 1,5 | $DQ_{réf13}$ | $DQ_{réf23}$ | $DQ_{réf33}$ | $DQ_{réf43}$ |
| 1 | $DQ_{réf12}$ | $DQ_{réf22}$ | $DQ_{réf32}$ | $DQ_{réf42}$ |
| 0,5 | $DQ_{réf11}$ | $DQ_{réf21}$ | $DQ_{réf31}$ | $DQ_{réf41}$ |

**TABLEAU II**

| Débit consigne (mg/cp) | Injecteur $I_1$ | Injecteur $I_2$ | Injecteur $I_3$ | Injecteur $I_4$ |
|---|---|---|---|---|
| 2 | $\Delta RPM_{réf14}$ | $\Delta RPM_{réf24}$ | $\Delta RPM_{réf34}$ | $\Delta RPM_{réf44}$ |
| 1, 5 | $\Delta RPM_{réf13}$ | $\Delta RPM_{réf23}$ | $\Delta RPM_{réf33}$ | $\Delta RPM_{réf43}$ |
| 1 | $\Delta RPM_{réf12}$ | $\Delta RPM_{réf22}$ | $\Delta RPM_{réf32}$ | $\Delta RPM_{réf42}$ |
| 0,5 | $\Delta RPM_{réf11}$ | $\Delta RPM_{réf21}$ | $\Delta RPM_{réf31}$ | $\Delta RPM_{réf41}$ |

**TABLEAU III**

| Pression \ Débit | 350 | 700 | 1000 | 1300 |
|---|---|---|---|---|
| 0,5 | $Tinj_{11}$ | $Tinj_{21}$ | $Tinj_{31}$ | $Tinj_{41}$ |
| 1 | $Tinj_{12}$ | $Tinj_{22}$ | $Tinj_{32}$ | $Tinj_{42}$ |
| 1,5 | $Tinj_{13}$ | $Tinj_{23}$ | $Tinj_{33}$ | $Tinj_{43}$ |
| 2 | $Tinj_{14}$ | $Tinj_{24}$ | $Tinj_{34}$ | $Tinj_{44}$ |

| D \ P | 350 | 700 | 1000 | 1300 |
|---|---|---|---|---|
| 0,5 | 1 | 5 | 9 | 13 |

| D \ P | 350 | 700 | 1000 | 1300 |
|---|---|---|---|---|
| 0,5 | 2 | 6 | 10 | 14 |

**TABLEAU IV :** Cylindre N° 1

| | | | | |
|---|---|---|---|---|
| 1 | 17 | 21 | 25 | 29 |
| 1,5 | 33 | 37 | 41 | 45 |
| 2 | 49 | 53 | 57 | 61 |

**TABLEAU V :** Cylindre N° 2

| | | | | |
|---|---|---|---|---|
| 1 | 8 | 22 | 26 | 30 |
| 1,5 | 34 | 38 | 42 | 46 |
| 2 | 50 | 54 | 58 | 62 |

| P<br>D | 350 | 700 | 1000 | 1300 |
|---|---|---|---|---|
| **0,5** | 3 | 7 | 11 | 15 |
| **1** | 19 | 23 | 27 | 31 |
| **1,5** | 35 | 39 | 43 | 47 |
| **2** | 51 | 55 | 59 | 63 |

**TABLEAU VI** : Cylindre N° 3

| P<br>D | 350 | 700 | 1000 | 1300 |
|---|---|---|---|---|
| **0,5** | 4 | 8 | 12 | 16 |
| **1** | 20 | 24 | 28 | 32 |
| **1,5** | 36 | 40 | 44 | 48 |
| **2** | 52 | 56 | 60 | 64 |

**TABLEAU VII** : Cylindre N° 4

**TABLEAU VIII**

| Estimation | *PCYL* | *RPM*<br>(<1800) |
|---|---|---|
| **Valeur moyenne** | 1,9 mg/cp | 2 mg/cp |
| **robustesse [3 s sur 1 mesure]** | ± 0,35 mg/cp | ± 0,68 mg/cp |
| **Erreur [3 s sur 20 mesures]** | ± 0,06 mg/cp | ± 0,15 mg/cp |

**Revendications**

1. Procédé de correction du débit de carburant de pré-injection, dit pilote, injecté par au moins un injecteur d'un moteur diesel du type à injection directe et à rampe commune dans au moins une chambre de combustion, le moteur comprenant des circuits de contrôle et de commande du débit pilote de carburant injecté dans chacune des chambre de combustion, ces circuits comprenant des moyens de mémorisation de données, **caractérisé en ce qu'**il comprend au moins :

- une phase initiale dite de calibrage comprenant les étapes :

- d'estimation (30) du débit pilote de carburant réellement injecté par chacun des injecteurs (I1 à I4) obtenue par la mesure d'un paramètre physique modifié par le débit pilote de carburant ;
- de comparaisons avec des valeurs de consigne de débit de carburant pilote pré-établies stockées dans les moyens de mémorisation (32), de manière à obtenir une série de points caractérisant le fonctionnement de chaque injecteur (I1 à I4) ; et
- de stockage dans des moyens de mémorisation de donnés, pour chacun des injecteurs, de ces points de fonctionnement sous la forme d'une première cartographie de valeurs de référence ; et

- des phases ultérieures dites opérationnelles comprenant les étapes :

- de réitération des étapes d'estimation et de comparaison réalisées pendant la phase initiale, de manière à obtenir une nouvelle série de valeurs des points de fonctionnement ;
- de déterminations de différences entre les nouvelles valeurs obtenues et les précédentes valeurs de référence de la première cartographie ; et
- l'utilisation des différences ainsi déterminées pour en dériver des valeurs de correction de débit pilote de carburant.

2. Procédé selon la revendication 1, **caractérisé en ce que** le paramètre physique de l'étape d'estimation étant la pression dans chacune des chambres de combustion ($Ch_1$ à $Ch_4$), il comprend les étapes supplémentaires de détermination d'une série de valeurs représentant les intégrales du dégagement de chaleur calculées sur une fenêtre angulaire d'amplitude déterminée et positionnée de façon déterminée par rapport à un point de fonctionnement dit « Point Mort Haut » pour chacune des chambres de combustion ($Ch_1$ à $Ch_4$), à partir d'une série de mesures de pression ($Vs_{CP}$) dans chacune des chambre de combustion ($Ch_1$ à $Ch_4$), de détermination d'une relation de proportionnalité entre la série de valeurs représentant des intégrales du dégagement de chaleur et des débits pilotes de carburant, et de stockage de ces valeurs comme valeurs de référence dans la première cartographie.

3. Procédé selon la revendication 2, **caractérisé en ce que** la détermination d'une série de valeurs représentant les intégrales du dégagement de chaleur s'effectue à l'aide de la relation suivante :

$$DQ = \frac{}{} = \frac{}{-} \times \left( \times \frac{}{} + \times \times \frac{}{} \right)$$

relation dans laquelle $DQ$ est dégagement de chaleur instantané, P le vecteur pression dans la chambre de combustion, V le vecteur volume de la chambre de combustion, $\alpha$ l'angle du vilebrequin du moteur (2) entraînant un piston dans la chambre de combustion ($Ch_1$ à $Ch_4$) et k le coefficient dit polytropique.

4. Procédé selon la revendication 1, **caractérisé en ce que** le paramètre physique de l'étape d'estimation étant le nombre de tours par minute du moteur (2), dits RPM, il comprend, pour chacun des injecteurs ($I_1$ à $I_4$), les étapes supplémentaires de commande de cycles moteur successifs avec et sans injection de carburant pilote, de mesures d'une série de valeurs de RPM dans chacun de ces cycles, de détermination d'une série de valeurs correspondant à des différences entre les valeurs mesurées lors de cycles avec et sans injection de carburant pilote respectivement, de détermination d'une relation de proportionnalité entre cette série de différences et des débits pilotes de carburant, et de stockage de ces différences comme valeurs de référence dans la première cartographie.

5. Procédé selon l'une quelconque des revendications 1 à 4, **caractérisé en ce qu'**il comprend des étapes supplémentaires de conversion des valeurs de consigne de débit de carburant pilote en temps d'ouverture de chacun des injecteurs ($I_1$ à $I_4$) pour injecter une quantité déterminée de carburant dans la chambre de combustion qui lui est associée ($Ch_1$ à $Ch_4$), à partir des valeurs de références de la première cartographie et de la pression ($Vs_{cr}$) régnant dans la rampe commune (20), et de stockage de ces temps d'ouvertures dans les moyens de mémorisation sous la forme d'une deuxième cartographie (33), de manière à commander la quantité de carburant injectée dans chaque chambre de combustion ($Ch_1$ à $Ch_4$).

**6.** Procédé selon la revendication 5, **caractérisé en ce que** les valeurs de référence stockées dans la deuxième cartographie ne sont remplacées par de nouvelles valeurs obtenues que lorsque l'amplitude des différences entre des nouvelles valeurs calculées et des valeurs précédemment stockées dépasse un seuil prédéterminé

**7.** Procédé selon la revendication 5, **caractérisé en ce que** l'étape de conversion comprend l'ajout d'une valeur de décalage à chaque temps d'ouverture d'injecteur précédemment stocké, décalage obtenu par incrémentations successives jusqu'à obtenir une des valeurs de référence de la première cartographie, et un calcul de moyenne entre des temps d'ouvertures précédemment stockés de la deuxième cartographie (33), dits *Tinj_anc,* et des temps d'ouverture nouvellement déterminés, dits *Tinj_nouv,* de manière à calculer des temps d'ouverture finaux, dits *Tinj_ final,* répondant à la relation suivante :

$$Tinj\_final = \bullet \times Tinj\_nouv + (1 - \bullet) \times Tinj\_anc$$

avec · un coefficient de moyenne prédéterminé, avec satisfaisant la relation 0 < <1, et le stockage dans les moyens mémorisation (33) de ces valeurs finales, *Tinj_final,* comme valeurs de temps d'ouverture de chaque injecteur ($I_1$ à $I_4$).

**8.** Procédé selon l'une quelconque des revendications 5 à 7, **caractérisé en ce que** les temps d'ouvertures sont stockés séquentiellement dans les moyens de mémorisation (33) selon un schéma de remplissage prédéterminé.

**9.** Procédé selon l'une quelconque des revendications 1 à 8, **caractérisé en ce qu'**il comprend une étape supplémentaire consistant à surveiller (34) l'apparition de conditions de fonctionnement prédéterminées du moteur (2), de manière à subordonner la réitération des étapes d'estimation et de comparaison et la correction des valeurs de consigne par leur remplacement par de nouvelles valeurs de consigne, et leur stockage dans les moyens de mémorisation (32) à l'apparition de ces conditions de fonctionnement prédéterminées.

**10.** Procédé selon la revendication 9, **caractérisé en ce que** la réitération des étapes d'estimation et de comparaison et la correction sont effectuées à la double condition que le moteur (2) soit en régime dit de décélération, en l'absence de carburant injecté, et qu'un véhicule muni de ce moteur (2) ait parcouru une distance pré-établie depuis la dernière correction réalisée.

**11.** Dispositif pour la mise en oeuvre du procédé selon l'une quelconque des revendications 1 à 10, **caractérisé en ce que** les circuits (3) de contrôle et de commande du débit pilote de carburant comprennent au moins :

- un premier module (30) dit « estimateur » recevant des signaux de sortie d'un premier capteur ($C_{cr}$ ; $CP_1$ - $CP_4$) mesurant une série de valeurs représentant le paramètre physique, une grandeur de mesure ($Vs_{cr}$) représentant la pression dans la rampe commune (20) délivrée par un capteur de pression de rampe ($C_{cr}$), et les données de consigne *($C_{ded}$)* de débit de carburant pilote, le module estimateur (30) comprenant des moyens de calcul pour élaborer à partir de ces données les valeurs de référence de la première cartographie ;
- un deuxième module (31) dit « de recalage » recevant les valeurs de référence ($Vs_{est}$ ; $Vs'_{est}$) élaborées par le module estimateur (30), les données de consigne *($C_{ded}$)* de débit de carburant pilote, et la grandeur de mesure *($Vs_{cr}$)* représentant la pression dans la rampe commune (20), le module de recalage (31) comprenant des moyens de calcul pour élaborer à partir de ces données les temps d'ouvertures de chacun des injecteurs ($I_1$ à $I_4$) pour constituer la deuxième cartographie (33);
- un module de mémorisation (32) des données de consigne ($C_{ded}$) de débit de carburant pilote ; et

des moyens de mémorisation pour stocker les première et seconde (33) cartographies.

**12.** Dispositif selon la revendication 11, **caractérisé en ce que** la grandeur physique étant la pression régnant dans chacune des chambres de combustion ($Ch_1$ à $Ch_4$), le premier capteur est un capteur de pression *($CP_1$ - $CP_4$)* disposé dans chaque chambre de combustion, les signaux de sortie ($Vs_{CP}$) de ce capteur de pression ($CP_1$ - $CP_4$) étant transmis à l'une des entrées de l'estimateur (300), de manière à calculer à partir de ces signaux de mesure de pression les valeurs de référence représentées par des intégrales de dégagement de chaleur et à remplir la première cartographie.

**13.** Dispositif selon la revendication 11, **caractérisé en ce que** la grandeur physique étant le nombre de tour par minute du moteur, dit *RPM,* le premier capteur est un capteur dit de régime moteur ($C_{cr}$) mesurant les valeurs de *RPM,* les signaux de sortie étant transmis à l'une des entrées de l'estimateur (301), de manière à calculer les valeurs de références à partir d'une série de différences de *RPM* mesurées, avec et sans injection de carburant pilote, respectivement, et à remplir la première cartographie.

**14.** Dispositif selon l'une quelconque des revendications 10 à 13, **caractérisé en ce qu'**il comprend un module supplémentaire (34) dit « superviseur » comprenant des moyens de calcul pour contrôler *(BS)* des conditions de fonctionnement prédéterminées du moteur (2), de manière à subordonner le remplacement des données de temps d'ouvertures par de nouvelles valeurs et leur stockage dans les moyens de mémorisation (32) à l'apparition de ces conditions de fonctionnement prédéterminées.

**15.** Dispositif selon la revendication 14, **caractérisé en ce que** le module superviseur (34) reçoit les signaux de sortie d'un compteur kilométrique (35), une distance prédéterminée parcourue par un véhicule comportant le moteur (2) constituant l'une des dites conditions à contrôler.

**16.** Dispositif selon la revendication 14, **caractérisé en ce que** le module superviseur (34) comprend en outre des moyens permettant de tester, de façon uniforme et selon un ordre déterminé, les valeurs de la deuxième cartographie (33), pour chaque injecteur ($I_1$ à $I_4$), sous la commande d'un compteur cyclique qui s'incrémente à la fin de chaque correction de débit de carburant pilote.

**17.** Dispositif selon l'une quelconque des revendications 14 à 16, **caractérisé en ce que** les circuits de contrôle et de commande du débit pilote de carburant (3) sont constitués par un processeur numérique à programme enregistré comprenant des moyens de calcul et de mémorisation, et **en ce que** les modules estimateur (30), de recalage (31), de mémorisation des valeurs de consigne de débit de carburant pilote (32), superviseur (35) et les moyens de mémorisation (33) de cartographie sont réalisés sous la forme de pièces de logiciel et/ou de composants matériel implémentés dans le processeur.

**18.** Moteur diesel du type à injection directe et à rampe commune **caractérisé en ce qu'**il comprend un dispositif de correction du débit de carburant pilote (3) selon l'une quelconque des revendications 11 à 17.

**Fig. 1**

Calculateur

Rampe commune

$C_{cr}$

CR

$Cp_1$ $I_2$ $Cp_2$ $I_3$ $Cp_3$ $I_4$

$I_1$

$Ch_1$ $Ch_2$ $Ch_3$ $Ch_4$

$P_1$ $P_2$ $P_3$ $P_4$

$Cp_4$

**Fig. 2**

Fig. 3

Fig. 4B

# Fig. 4A

# Fig. 5

Office européen
des brevets

**RAPPORT DE RECHERCHE EUROPEENNE**

Numéro de la demande

EP 07 30 1054

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DE 103 49 883 A1 (DAIMLER CHRYSLER AG [DE]) 2 juin 2005 (2005-06-02) * alinéa [0023] - alinéa [0028]; figure 2 * | 1,5,11, 18 | INV. F02D41/40 F02D41/14 F02D41/26 |
| X | DE 102 32 356 A1 (BOSCH GMBH ROBERT [DE]) 29 janvier 2004 (2004-01-29) * alinéa [0028] - alinéa [0031]; figures * | 1 | |
| X | EP 1 526 267 A (SIEMENS AG [DE]) 27 avril 2005 (2005-04-27) | 1,9 | |
| A | * alinéas [0032], [0036], [0041] * | 6 | |
| D,X | EP 1 416 140 A1 (BOSCH AUTOMOTIVE SYSTEMS CORP [JP]; TOYOTA MOTOR CO LTD [JP]) 6 mai 2004 (2004-05-06) * le document en entier * | 1 | |
| D,A | WO 03/087562 A (PEUGEOT CITROEN AUTOMOBILES SA [FR]; DELPHI TECH INC [US]; VERMONET CL) 23 octobre 2003 (2003-10-23) * le document en entier * | 1-18 | DOMAINES TECHNIQUES RECHERCHES (IPC) F02D |

Le présent rapport a été établi pour toutes les revendications

| Lieu de la recherche | Date d'achèvement de la recherche | Examinateur |
|---|---|---|
| Munich | 19 septembre 2007 | LANDRISCINA, V |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**                    EP 07 30 1054

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-09-2007

| Document brevet cité au rapport de recherche | | Date de publication | Membre(s) de la famille de brevet(s) | | Date de publication |
|---|---|---|---|---|---|
| DE 10349883 | A1 | 02-06-2005 | AUCUN | | |
| DE 10232356 | A1 | 29-01-2004 | WO | 2004016928 A1 | 26-02-2004 |
| EP 1526267 | A | 27-04-2005 | US | 2005085990 A1 | 21-04-2005 |
| EP 1416140 | A1 | 06-05-2004 | CN | 1507535 A | 23-06-2004 |
| | | | DE | 60204325 D1 | 30-06-2005 |
| | | | DE | 60204325 T2 | 26-01-2006 |
| | | | ES | 2242050 T3 | 01-11-2005 |
| | | | WO | 03016697 A1 | 27-02-2003 |
| | | | JP | 2003056389 A | 26-02-2003 |
| WO 03087562 | A | 23-10-2003 | AU | 2003246793 A1 | 27-10-2003 |
| | | | EP | 1499803 A1 | 26-01-2005 |
| | | | FR | 2838775 A1 | 24-10-2003 |
| | | | JP | 2005522627 T | 28-07-2005 |
| | | | US | 2005121000 A1 | 09-06-2005 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20050107943 A1
- US 6196184 B1
- EP 1416140 B1
- US 5941213 A
- FR 2838775 A1